# EUROPEAN PATENT SPECIFICATION

(11) **EP 4 178 706 B1**
(45) Date of publication and mention of the grant of the patent: **14.08.2024**
(21) Application number: 21740056.3
(22) Date of filing: 07.07.2021
(51) Int. Cl.: B01D 39/16, B01D 39/18

(54) **FILTRATION MEDIA**
FILTRIERUNGSMEDIEN
MILIEUX DE FILTRATION

(30) Priority: 07.07.2020 EP 20184605
(43) Date of publication of application: 17.05.2023
(73) Proprietor: Ahlstrom Oyj, 00100 Helsinki (FI)
(72) Inventor: POLOZZI, Marcelo, 00100 Helsinki (FI)
(74) Representative: Laine IP Oy
(86) International application number: PCT/EP2021/068881
(87) International publication number: WO 2022/008614

(56) References cited:
- CN-A- 103 321 090
- GB-A- 954 527
- US-A- 3 090 700
- US-A- 3 226 251
- US-A- 3 294 582
- US-A1- 2016 136 553

## Description

### FIELD OF THE INVENTION

This invention relates to filtration media, more particularly, to resin-impregnated filtration media such as may be used for filtering fluids in automotive, industrial and domestic applications.

### BACKGROUND TO THE INVENTION

Filtration media used in automotive, industrial and domestic applications are generally formed by impregnating a fibrous substrate (such as paper) with a chemical binder such as for example phenol-formaldehyde (resole or novolac or a blend of novolac and resole) resin or latex resin. The resin provides the substrate with structural rigidity and resistance to tearing or bursting which may otherwise occur when exposed to pressurised and heated fluids during filtering. Once impregnated with the resin, the substrate is heat cured to cross-link the resin and remove any excess solvent which may be present. The substrate can then be pleated, cut and folded into a desired shape. The folded substrate can be assembled with additional supporting elements into its final form, which in some applications may be cylindrical (e.g. oil and fuel filters for automotive engines) and in other applications in the form of a panel (e.g. air conditioning filters). The assembled substrate may be subjected to further heat treatment to fix it in position.

Conventional resole resins used in the above process are synthesised in a base-catalysed reaction of bisphenol-A with phenol and formaldehyde. Conventional novolac resins used in the above process are synthesized in an acid-catalysed reaction of cresols (methylphenol). These resins have the desirable properties of being water resistant, oil resistant, and chemical resistant, and are stable at high temperatures, making them especially suitable for use in automotive filtration applications. However, a shortcoming of these resins is that they are prone to emitting toxic phenol and formaldehyde gases, which may negatively affect the health of anyone to whom they are exposed and which have a negative environmental impact.

A further disadvantage of conventional phenolic-formaldehyde resins is that their starting materials are typically obtained from non-renewable hydrocarbon sources, and they require large quantities of reagents, solvent, energy and manufacturing inputs to produce. As a result they are costly both environmentally and financially.

One alternative to using pure phenol-formaldehyde resin is to combine it with Vinsol^{®} resin. Vinsol^{®} resin is a thermoplastic lignin-type resinous material derived from pine wood. As disclosed in US5656733A, US5683497A and US5702521A, it made up of a complex mixture of high molecular weight phenolic compounds, rosin acids, neutral materials and several minor components.

US3294582 discloses a process for manufacturing a filter paper element for use in automotive applications. The filter paper is impregnated with a resinous varnish which consists essentially of a mixture of a heat-curable resole-type phenol-formaldehyde resin, water, resorcinol, and Vinsol^{®} resin. US3294582 discloses that the Vinsol^{®} resin is preferably present in amounts of about 25 parts by weight to 100 parts by weight of the phenol-formaldehyde resin solids and the resorcinol is present in amounts of about 3 parts by weight.

A shortcoming of using Vinsol^{®} resin to impregnate filtration media is that it has a high density (~1.33 g/ml) and viscosity (20-300 mPa.s at 25 °C) making it difficult to impregnate into filtration media substrates. This can result in the filtration media having an inconsistent or incomplete coating which can result in structural failures during use. The high viscosity may result from the high molecular weight of 20,000 g/mol of the main lignin component of Vinsol^{®}. A further drawback of Vinsol^{®} resin is that it is poorly soluble in most solvent systems that are suitable for coating filtration media. Document GB 954 527 discloses a filtration media according to the preamble of claim 1.

There is accordingly a need for a filtration media that addresses the aforementioned problems at least to some extent. More particularly, the present invention provides a filtration media which is manufactured by a process that is more environmentally friendly and safer to operate than existing processes due to its reduced phenol and formaldehyde emissions. The present invention achieves this advantage whilst also using a resin composition that has physical properties enabling it to be processed and impregnated efficiently and uniformly. It is a further aim of the present disclosure for the filtration media to exhibit comparable operating performance to filtration media known in the art.

### SUMMARY OF THE INVENTION

In accordance with a first aspect of the invention, there is provided a filtration media comprising a fibrous web impregnated with a resin composition comprising lignin, wherein:
the fibrous web comprises the lignin in an amount of from 0.1 to 30 wt% by weight of the fibrous web; and
the lignin has a density of less than 1.2 g/cm³ and a weight average molecular weight of less than 20,000 g/mol when measured according to ASTM D4001-13 standard.

The lignin may have a pH of less than 7, preferably from 3 to 5, or most preferably from 4 to 4.5.

The resin composition may have a dynamic viscosity of less than 15 mPa.s, preferably between 5 and 13 mPa.s, and more preferably between 7.5 and 9.5 mPa.s, when measured according to ISO 2555:2008 standard.

The resin composition may have a pH of from 4 to 7, preferably from 5 to 6.

The lignin may have a density of less than 1 g/cm³, preferably between 0.20 g/cm³ and 0.75 g/cm³, and more preferably comprised between 0.25 g/cm3 and 0.45 g/cm3.

The resin composition may further contain a formaldehyde scavenger having at least one primary or secondary amine functional group or being polyamines, and the formaldehyde scavenger may be selected from urea, ammonia, melamine, dicyandiamide, polyethyleneimine, or polyvinylamine, and may preferably be urea.

The resin composition may comprise an epoxy-based component also known as polyepoxide or epoxy resin. This epoxy-based component can be selected from the aromatic or aliphatic polyepoxide such as a reaction product formed from bisphenol and epichloridrine, from novolac and epichloridrine, or from aliphatic alcohols and epichloridrine, and may be preferably a bishpenol A - diglycidyl ether.

The resin composition may comprise lignin and a phenolic resin, which may preferably be present in a lignin: phenolic resin weight ratio of from 1:1 to 1:9, preferably from 1:1 to 1:4, and more preferably 1:2.

The filtration media may comprise from 10 wt% to 50 wt%, preferably from 10 wt% to 40 wt%, and more preferably from 10 wt% to 30 wt% of the resin composition.

The fibrous web may comprise at least 80 wt%, preferably at least 90 wt%, or more preferably at least 95 wt% cellulose fibres based on the total weight of fibres.

The fibrous web may comprise at least 80 wt%, preferably at least 90 wt%, or more preferably at least 95 wt% synthetic fibres based on total weight of fibres.

The fibrous web may comprise a mixture of cellulose fibres and synthetic fibres. The synthetic fibres may be present in the fibrous web in an amount of up to 50 wt%, or preferably between 10 wt% and 30 wt%, of the total weight of fibres in the web.

The cellulose fibres may be selected from one or more of softwood fibres, hardwood fibres, vegetable fibres and regenerated cellulose fibres.

The filtration media may be selected from the group comprising oil filtration media, air filtration media, fuel filtration media, hydraulic filtration media, industrial filtration media, a dielectric fluid filtration media, and water filtration media. The air filtration media may be used in a heavy panel filter, or in a duty air panel filter.

In accordance with a second aspect of this invention, there is provided a method of manufacturing a filtration media as defined above, comprising impregnating a fibrous web with a lignin-containing resin composition and curing the impregnated fibrous web.

The present invention will be better understood in light of the following examples that are given in an illustrative manner and should not be interpreted in a restrictive manner and of the accompanying figures.

### BRIEF DESCRIPTION OF THE FIGURES

In the accompanying Figures:
- Figure 1: is a graph illustrating burst strengths of cured resin compositions containing 10%, 20%, 30%, 40% and 50% lignin;
- Figure 2: is a graph illustrating burst strengths of cured resin compositions containing 10%, 20%, 30%, 40% and 50% lignin after aging for 24 h at 160 °C;
- Figure 3: is a graph illustrating curing rates of the resin compositions of Figures 1 and 2;
- Figure 4: is a graph illustrating burst strength for resin compositions containing hexamine and paraformaldehyde;
- Figure 5: is a graph illustrating burst strength of the resin compositions of Figure 4 after ageing for 24 h at 160 °C;
- Figure 6: is a graph illustrating levels of emission of formaldehyde and phenol of filtration media impregnated with phenol-formaldehyde resin and phenol-formaldehyde resin containing 30% lignin according to the present invention;
- Figure 7: is a graph illustrating filtration performance measured in differential pressure (kPa) v flow rate (L/minute) of an oil filter filtration media comprising 30% lignin according to the present invention;
- Figure 8: is a graph illustrating average filter efficiency versus particle size of the oil filter of Figure 7;
- Figure 9: is a graph illustrating differential pressure versus time measured for the oil filter of Figures 7 and 8;
- Figure 10: is a graph comparing hot oil burst strengths at 140 °C for filtration media comprising a 30% lignin resin composition and filtration media comprising a lignin-free resin composition;
- Figure 11: is a graph comparing the particle size filtration efficiency of (i) a planar filtration media impregnated with phenol-formaldehyde resin containing 30% lignin according to the present invention, and (ii) a planar filtration media impregnated with phenol-formaldehyde resin only.

### DETAILED DESCRIPTION OF THE INVENTION

As used herein and in the accompanying claims, unless the content requires otherwise, the terms below are intended to have the definitions as follows.

"Comprise" or variations such as "comprises" or "comprising" will be understood to imply the inclusion of a stated integer or group of integers but not the exclusion of any other integer or group of integers.

"Fibre" is a fibrous or filamentary structure having a high aspect ratio of length to diameter.

"Staple fibre" means a fibre which naturally possesses or has been cut or further processed to definite, relatively short, segments or individual lengths.

"Fibrous" means a material that is composed predominantly of fibre and/or staple fibre.

The terms "non-woven" or "web" refers to a collection of fibres and/or staple fibres in a web or mat which are randomly interlocked, entangled and/or bound to one another so as to form a self-supporting structural element.

"Synthetic fibre" refers to fibres made from fibre-forming substances including polymers synthesised from chemical compounds, modified or transformed natural polymer and silicious (glass) materials. Such fibres may be produced by conventional melt-spinning, solution-spinning, solvent spinning and like filament production techniques.

"Formaldehyde scavenger" means a compound capable of trapping formaldehyde gaseous emissions.

In the following, the term "water-soluble" has to be understood as a compound, at least 10% of which is able to be dissolved in water at room temperature (20°C) under atmospheric pressure.

The present disclosure provides a filtration media suitable for use in a variety of automotive, industrial and domestic fluid purification applications.

The filtration media comprises a fibrous web impregnated with a resin composition that includes lignin. The lignin is present in the fibrous web in an amount of from 0.1 to 30 wt%, preferably from 0.1 to 20 wt%, or more preferably 0.1 to 15 wt%, by weight of the fibrous web.

The lignin has either or both of (i) a density of less than 1.2 g/cm³, and (ii) a weight average molecular weight of less than 20,000 g/mol when measured according to ASTM D4001-13 standard (this is a standard test method for determining the weight-average molecular weight of polymers by light scattering detection).

The lignin density may be less than 1 g/cm³, preferably between 0.20 g/cm³ and 0.75 g/cm³, more preferably between 0.25 g/cm³ and 0.45 g/cm³, and most preferably between 0.35 g/cm³ and 0.40 g/cm³.

The pH of the lignin is less than 7, preferably from 3 to 5, or most preferably from 4 to 4.5. The pH can be determined according to the standard ISO 10523:2008 procedure in a dilute 30% aqueous solution of the lignin. This standard determines the pH of the lignin by measuring the potential difference of an electrochemical cell where one of two half-cells is a measuring electrode and the other is a reference electrode. The potential of the measuring electrode is a function of the hydrogen ion activity of the measured solution.

The low density, acidic pH, and comparatively low molecular weight, provide the lignin of the present disclosure with a favourably low viscosity of less than 15 mPa.s, which enables the lignin to be dissolved in the resin composition and impregnated into the fibrous web with relative ease. Moreover, the low viscosity of the resin may improve the uniformity and speed of impregnation of the fibrous web. This can be contrasted with commercially available Vinsol^{®} resin which has a high density of 1.33 g/cm³, a high viscosity of 20-300 mPa.s at 25 °C, and poor solubility in most solvent systems.

The lignin can be obtained for example from the Kraft process. As is well known in the art, the Kraft process (also known as Kraft pulping or the sulphate process) is a process for converting wood into cellulose fibre pulp. The process involves treating wood chips with a hot mixture of water, sodium hydroxide (NaOH), and sodium sulfide (Na₂S), to cleave bonds between lignin, hemicellulose, and cellulose. The method includes several mechanical and chemical steps, which result in the formation of two product streams: a cellulose fibre stream and a lignin stream. The wood used in the Kraft process from which the lignin is obtained can be a softwood (i.e. from gymnosperm trees such as conifers, e.g. pines), a hardwood (i.e from angiosperm trees), or a combination thereof. The lignin obtained from the Kraft process represents a renewable source of resin which has a lower environmental impact than resin obtained from oil-based hydrocarbon sources. Since the Kraft lignin is a by-product of the Kraft process, minimal processing is required to obtain it.

In addition to comprising lignin, the resin composition includes a phenolic (phenol-formaldehyde resin such as resole or novolac) resin. The phenolic resin can be present in the resin composition in an amount of from 50 wt% to 90 wt%, preferably from 60 wt% to 90 wt%, or more preferably from 70 wt% to 90 wt% based on the total weight of the resin composition. The resole resin may be formed by a base-catalysed reaction of bisphenol-A with phenol and formaldehyde. The novolac resin may be formed by an acid-catalysed reaction of cresols (methylphenol).

The lignin and phenolic resin can be present in the resin composition in a lignin:phenolic resin weight ratio of from 1:1 to 1:9, preferably from 1:1 to 1:4, and more preferably 1:2. The weight ratio of lignin:phenolic resin does not change when the resin is dried and remains substantially equivalent after the drying step, enabling the removal of the solvents used for the impregnation of the fibrous web, or after the curing step, enabling the cross-linking of the resin composition.

The resin composition can also contain a cross-linking agent, such as for example hexamine, paraformaldehyde or a dicyandiamide-formaldehyde condensate. The dicyandiamide-formaldehyde condensate is preferably a water-soluble thermosettable resinous compositions containing s as described in US-4,383,077 A. The dicyandiamide-formaldehyde condensate can be obtained by the methods claimed in US-4,383,077, and are preferably those dicyandiamide-formaldehyde condensates disclosed in the Examples of US-4,383,077. This cross-linking agent enables the resin composition to crosslink with the fibrous web during the curing step. This cross-linking agent can be present in the resin composition in an amount of up to 20 wt% based on the total weight of the resin composition.

The resin composition can further contain a formaldehyde scavenger having at least one primary or secondary amine functional group or being a polyamine. The formaldehyde scavenger may be selected from urea, ammonia, melamine, dicyandiamide, polyethyleneimine, and polyvinylamine. It is particularly useful if the formaldehyde scavenger is urea. The amine group of the formaldehyde scavenger may react with residual formaldehyde in the resin to convert the formaldehyde into a Schiff base compound, which has reduced volatility and toxicity. As these types of reactions are typically acid-catalysed, it is preferable for the resin composition to have a pH below 7. The resin composition typically has a pH of from 4 to 7, preferably of from 5 to 6. More particularly, the use of a formaldehyde scavenger enables to bring the emissions of formaldehyde close to zero.

According to a further embodiment, the resin composition may comprise an epoxy-based component also known as polyepoxide or epoxy resin. This epoxy based component can be selected from aromatic or aliphatic polyepoxides such as a reaction product formed from bisphenol and epichloridrine, or from novolac and epichloridrine, or from aliphatic polyols and epichloridrine, and may be preferably a bisphenol A - diglycidyl ether. This epoxy-based component can be used to replace a part or all of the phenolic resin and also decrease the content of such compound in the resin composition. For example, based on the total weight of the lignin, epoxy resin and phenolic resin in the resin composition, the lignin is preferably present in the amount of 10-80wt.% (more preferably 25-50 wt.%), the epoxy resin is preferably present in the amount of 10-80wt.% (more preferably 25-50 wt.%), and the phenolic resin is preferably present in the amount of 10-80wt.% (more preferably 25-50 wt.%). According to another embodiment, the resin composition contains less than 5 wt.% of the phenolic resin (preferably 0 wt.%) and the lignin:epoxy resin weight ratio in the resin composition is, for example, from 1:1 to 1:9. In both cases, the weight ratio of lignin:epoxy resin, and phenolic resin if present, does not change when the resin is dried and remains substantially equivalent after the drying step, enabling the removal of the solvents used for the impregnation of the fibrous web, or after the curing step, enabling the crosslinking of the resin composition. The epoxy function of the epoxy-based component is able to react with the lignin and the phenolic resin, acting as a crosslinking agent for the resin composition as the formaldehyde does. Therefore, the addition of this epoxy based component enables the user to decrease the content of formaldehyde in the resin composition without negatively affecting the final properties of the filtration media.

The resin composition has a dynamic viscosity of less than 15 mPa.s, preferably between 5 and 13 mPa.s, and more preferably between 7.5 and 9.5 mPa.s, when measured according to ISO 2555:2008 (a standard protocol for determining the apparent viscosity of resins in the liquid or similar state using a rotational viscometer. Also known as the Brookfield test method.)

The inclusion of lignin in the resin composition has the advantageous effect of reducing the quantity of phenol and formaldehyde gases emitted from the resin. The decrease in emission of these gases may be correlated with the quantity of lignin in the resin composition, such that higher quantities of lignin result in greater reductions in emissions and lower quantities of lignin provide lower reductions in emissions. Thus, the presence of lignin in the resin composition results in a more environmentally-friendly product. It also decreases the negative health impact on workers operating manufacturing processes to produce these filtration media in comparison to manufacturing processes used to produce conventional filtration media known in the art. Without wanting to be bound by theory, it is believed that the emission of phenol and formaldehyde from resole resins can be attributed either to leaching out of unreacted starting materials, or to decomposition of the phenolic resin into its constituent components. By including lignin in the resin composition, the total quantity of phenolic resin and its starting materials is reduced. Alternatively, or in addition, the lignin may serve a role in protecting phenolic resin from degradation. The quantity of phenol and formaldehyde emitted from the filtration media can be measured in terms of mg of phenol or formaldehyde emitted per kg of filtration media. The filtration media impregnated with a lignin-containing resin composition may emit 50%, 60%, 70%, 80%, 90% or 99% less phenol and/or formaldehyde than a filtration media impregnated with lignin-free phenolic resin. Furthermore, it should be noted that lignin is derived from renewable resources, in contrast to phenolic resins which are sourced from fossil fuels. This further contributes to the environmentally-friendly character of the resin composition described herein.

The resin composition may include additional or alternative polymers to phenolic resin, such as styrene acrylic, acrylic, polyethylene vinyl chloride, styrene butadiene rubber, polystyrene acrylate, polyacrylates, polyvinyl chloride, polynitriles, polyvinyl acetate, polyvinyl alcohol derivates, starch polymers, phenolics and combinations thereof, including both waterborne and solvent versions. In some cases, the additional or alternative resin may be in the form of a latex, such as a water-based emulsion.

To enhance internal bonding between the fibres, the fibrous web may include binder fibres. These are bicomponent thermoplastic fibres comprising a thermoplastic core fibre surrounded by a meltable coating of thermoplastic polymer which has a lower melting point than the core. The low melting point coating may therefore act as a thermoplastic binding agent when softened or partially melted by heating during processing of the fibrous web, thereby adhering to the neighbouring fibres of the web. The higher melting material forming the core may act as a structural material.

The resin composition may further include one or more additive components. The additive component may be: a dyeing agent, which may be required to give the filtration agent a favourable appearance; fibre retention agents; separation aides (e.g. silicone additives and associated catalysers); a fire or flame retardant; a hydrophilic or hyrophobic agent; a wetting agent; an antistatic agent; or an antimicrobial agent. If present, these additives may be included in amounts of greater than 0 wt%, 0.01 wt%, 0.1 wt%, 1 wt%, 5 wt%, 10 wt% and/or less than about 30 wt%, 25 wt%, 20 wt%, 15 wt%, 10 wt%, 9 wt%, 8 wt%, 7 wt%, 6 wt%, 5 wt%, 4 wt%, 3 wt%, 2 wt%, 1 wt%, or any combination thereof, including for example between 0.01 wt% and 1 wt%, based on the total weight of the resin composition. According to a particular embodiment, the resin composition can contain between 10 wt% and 20 wt% of a flame retardant agent, such as phosphoric acid.

The filtration media can comprise from 10 wt% to 50 wt%, preferably from 10 wt% to 40 wt%, and more preferably from 10 wt% to 30 wt% of the resin composition. The remaining portion of the filtration media largely consists of the fibrous web.

The fibrous web can comprise at least 80 wt%, preferably at least 90 wt%, or more preferably at least 95 wt% cellulose fibres based on the total weight of fibres. The cellulose fibres may be selected from one or more of softwood fibres, hardwood fibres, vegetable fibres and regenerated cellulose fibres.

Alternatively, the fibrous web can comprise at least 80 wt%, preferably at least 90 wt%, or more preferably at least 95 wt% synthetic fibres based on total weight of fibres. The synthetic fibres can be selected from one or more of synthetic polymeric fibres, modified or transformed natural polymeric fibres, or silicious (glass) fibres. Exemplary fibres suitable for the fibrous web include polyesters (e.g. polyalkylene terephthalates such as polyethylene terephthalate (PET), polybutylene terephthalate (PBT) and the like), polyalkylenes (e.g. polyethylenes, polypropylenes and the like), polyacrylonitriles (PAN), and polyamides (nylons, e.g. nylon-6, nylon 6,6, nylon-6,1 2, and the like).

According to another alternative, the fibrous web can comprise a mixture of cellulose fibres and synthetic fibres. The synthetic fibres can be present in the fibrous web in an amount of up to 50 wt%, preferably between 10 wt% and 30 wt%, or preferably between 15 wt% and 25 wt% of the total weight of fibres in the web.

The filtration media may be selected from the group comprising air filtration media, fuel filtration media, oil filtration media, hydraulic filtration media, industrial filtration media, a dielectric fluid filtration media, and water filtration media.

The disclosure extends to a method of manufacturing the filtration media defined herein. The method includes impregnating a fibrous web with a lignin-containing resin composition drying and curing the impregnated fibrous web.

Once the lignin-containing resin composition has been formed, it is transferred to an impregnating device where the resin composition is applied through dosing rollers to achieve a uniform degree of impregnation throughout the fibrous web. The quantity of resin applied to the web is dependent of the end-use of the filtration media. Once the resin has been applied to the fibrous web, the impregnated web enters a drying oven, where solvent is removed in a drying step. The drying step is generally carried out at a temperature of between 80°C and 150°C. The resin is then cross-linked to the fibrous web in a curing step by heating the impregnated web in a curing oven at a temperature of between 120 °C and 200 °C, between 150 °C and 180 °C, or between 180 °C and 200 °C. Alternatively, curing can be achieved by ultraviolet or infrared radiation. Once fully cured, the impregnated fibrous web has obtained its final characteristics. These characteristics include its weight, thickness, corrugation, burst strength explosion, permeability, pore diameter, percentage resin content, humidity, or level of cure. According to a particular embodiment, the drying step and the curing step may be performed simultaneously, that is to say in a single step, and in particular when a cross linker is used.

Once the filtration media has been formed, it may be corrugated, cut, folded, pleated, subjected to additional curing steps, and assembled into the filtration product that will ultimately be used.

The filtration media may be an air filtration media. The air filtration media may be configured to filter automotive cabin air. In particular, the filtration media may be configured to filter particulates (such as dust, pollen, soot, bacteria and PM2.5), gases (such as ozone, benzene, SOx, and NOx) or odours from cabin air. The filtration media may include a layer of carbon (which may be activated carbon) to assist in filtering undesirable gases and particulates from the cabin air.

The air filtration media may be configured as an automotive air intake filter, which may be configured to filter particulates (such as dust, pollen, soot, bacteria and PM2.5) from air entering a vehicle's engine. The filtration media may optionally be treated to include a fire retardant layer, a water repellent layer, or one or more of a nanofibre layer, a fine fibre meltblown layer, or a synthetic laminate layer to enhance strength and filtering performance.

The air filtration media may be configured for an industrial filtration media such as a gas turbine air intake filter, an air-oil separation filter (e.g. in compressed air applications), an air pollution control and dust collection filter element (such as may be used to reduce or eliminate the emission of particles into the atmosphere from industrial sources), or a heating, ventilation and air conditioning (HVAC) filter element, among others.

The filtration media may be configured as a fuel filter element which may be configured to filter organic and inorganic impurities from fuel. The fuel filter element may comprise multiple layers of the filtration media and may be configured to separate and retain both particulate and water impurities from fuel.

The filtration media may be configured as an oil filtration media. The oil filtration media may be configured to filter impurities, such as soot, dust and particulates, from oil. In these embodiments, the filtration media may have a high durability in hot oil, particularly a high hot oil burst resistance.

The filtration media may be configured for use in filtering dielectric fluid used in electrical discharge machining (EDM) processes.

The filtration media may be configured as a hydraulic filter media for use in hydraulic applications.

The filtration media may be configured for use in the filtration of water. The filtration media may be configured to filter contaminants at a submicron level, including organic acids, viruses, bacteria, cysts, cell debris and trace pharmaceuticals, from water. To enhance filtration performance, the filtration media may be coated with an electrostatically-charged layer or an activated carbon layer.

The present invention will be further illustrated by the following non-limiting examples thereof.

### Examples

### Procedures

The samples were produced using a laboratory wetlaid hand sheet mold using a modified TAPPI T205 Procedure, with modifications described herein. The furnish as described in the recipe was mixed with 2 liters of tap water and disintegrated with a standard laboratory disintegrator (Noram) for 1500 revolutions. The furnish was then poured into the wet laid mold and diluted with approx. 25 litres of tap water, stirred 3 times with a pedal stir, and drained through a standard paper machine wire.

The hand sheets were then squeezed dry with a couching roller rolled across 3 times, redried in a flatbed speed oven for 5 minutes at 350°F (177 °C) and subsequently dried in an oven for 5 minutes at 350°F (177 °C). Raw physical data such as raw basis weight, calliper, air permeability were taken immediately after oven drying on the oven dried (OD) sheet.

The samples were then saturated with a standard phenolic resin at a content of 25 wt.% based on total sheet weight (bath solids of resin bath were 18% in methanol as solvent). The samples were then air dried for 24 hours in ambient conditions, and cured to arrive at the SDC (saturated dried cured) level at 350°F (177 °C) for 5 minutes. SDC basis weight was recorded immediately after curing, and other SDC data such as SDC calliper and SDC air permeability were measured subsequently.

### Test Methods

The following test methods were employed to obtain the data reported in the Tables below.

Filtration performance: This was determined using multi-pass testing. This test requires the recirculation of unfiltered fluid through the filter element and filtration performance measured according to a variety of possible parameters. In some cases differential pressure multipass testing was done. Defined in ISO 4548-12 standard.

Differential pressure test: refers to the measurement of pressure within a test filter relative to the pressure surrounding the filter inside a housing in which it has been installed. Differential pressure determines how efficiently fluid moves through a filter. When differential pressure is high, it indicates that a filter is close to capacity.

Filtration efficiency: defined in ISO 4548-12. This refers to the ability of the filter to retain particles, expressed as the percentage of particles of a given size retained by the filter under the test. Samples of liquid or gas are measured during a test in front of and behind a filtration media using particle counters. The concentration of particles is measured and the filtration efficiency is calculated based on differences in the quantity of particles on either side of the filter.

Flow restriction test: defined in ISO 4548-12 standard. This test procedure determines the contaminant capacity of a filter, its particulate removal characteristics and differential pressure. This test is intended for application to filter elements with an efficiency of less than 99% at particle size greater than 10 µm. This test corresponds to a multipass filtration test with continuous contaminant injection and using the online particle counting method for evaluating the performance of full-flow lubricating oil filters for internal combustion engines. It is limited to steady state conditions and does not address fluctuation in the flow rate.

Air Permeability: The air permeability of the media is measured according to TAPPI Standard T 251 cm-85 ("Air Permeability of Porous Paper, Fabric and Pulp Handsheets") with 0.5 inch (2.7 mm) water differential using a Textest AG (model FX3300) and reported as the rate of the flow of air in cubic feet per square foot of sample area per minute (cfm/sf), sometimes referred to more simply as cfm.

Mean Flow Pore (MFP) Size: Measured according to standard test procedure ASTM F-316.

Burst Strength: The pressure required to rupture a media sample was measured using a MULLEN^{®} burst strength tester according to TAPPI Standard T403. Results are reported in pounds per square inch (psi) at media rupture.

Calliper: The calliper (thickness) of SDC media was measured using a 89-100 Thickness Tester from Thwing-Albert Instrument Company according to TAPPI Standard T41 1, "Thickness (calliper) of paper, paperboard and combined board" (incorporated fully by reference herein).

Stiffness: Stiffness of OD and SDC media was obtained by TAPPI T489 om-92 using a GURLEY^{™} bending resistance tester MOD 4 17 1D (Gurley Precision Instruments).

Hot Oil Burst Strength: The hot oil burst strength of a media sample is the maximum hydrostatic pressure required to result in rupture of the media sample when a controlled and constantly increasing pressure is applied through a rubber diaphragm to an area of 7.07 cm². Hot oil burst strength was determined by placing a media sample (size 14 cm x 10 cm) into an oil bath of typical engine oil (e.g., MOBIL 1^{™} motor oil) maintained at 140°C ± about 0.1 °C for 144 hours. The media sample is then removed from the hot oil bath and cooled for about 5 minutes with excess oil being blotted from the media sample. The moisture free sample is then tested using a MULLEN^{®} burst strength tester with the results being reported in force per unit area, i.e., pounds per square inch (psi), at media rupture.

### Example 1

In order to optimise the quantity of lignin in the resin, samples of phenolic (resole) resin were prepared containing 10%, 20%, 30%, 40% and 50% (vol/vol) lignin as follows:

| | **Test 1** - **10% lignin** | | **Test 2** - **20% lignin** | | **Test 3** - **30% lignin** | | **Test 4** - **40% lignin** | | **Test 5** - **50% lignin** | |
|---|---|---|---|---|---|---|---|---|---|---|
| | % | 9 | % | 9 | % | 9 | % | 9 | % | 9 |
| Phenolic resin | 89.0 | 41.1 | 78.0 | 36.0 | 68.0 | 30.9 | 56.0 | 27.5 | 45.0 | 20.7 |
| Lignin | 10.0 | 2.4 | 20.0 | 4.8 | 30.0 | 7.2 | 40.0 | 9.6 | 50.0 | 12.0 |
| Paraformaldehyde | 1.0 | 0.24 | 2.0 | 0.48 | 3.0 | 0.72 | 4.0 | 0.96 | 4.0 | 1.2 |

The resin compositions were applied to filter paper samples which were cured and tested in triplicate according to the test methods described above. Their characteristics are summarised in Tables 1-5 below. In the following tables, "Target" refers to target technical performance of the parameters.

**Table 1 - Test 1, 10 wt% lignin in the resin composition**

| **Characteristic s** | **Unit** | **Target** | **Test 1** | **Test 2** | **Test 3** | **Average** |
|---|---|---|---|---|---|---|
| Burst (not cured) | kg/cm² | >1,2 | 1,25 | 1,30 | 1,45 | 1,33 |
| Burst (cured*) | kg/cm² | >2,2 | 2,25 | 2,37 | 2,28 | 2,30 |
| Stiffness (not cured) | mg | >1500 | 1600,20 | 1644,60 | 1333,50 | 1526,10 |
| Stiffness (cured*) | mg | >1900, preferably >2000 | 1929,10 | 2000,20 | 1911,30 | 1946,87 |
| Burst (after aging**) | kg/cm² | >1,2 | 1,18 | 1,22 | 1,22 | 1,21 |

**Table 2 - Test 1, 20 wt% lignin in the resin composition**

| **Characteristics** | **unit** | **Target** | **Test 1** | **Test 2** | **Test 3** | **Average** |
|---|---|---|---|---|---|---|
| Burst (not cured) | kg/cm² | >1,2 | 1,20 | 1,21 | 1,23 | 1,21 |
| Burst (cured*) | kg/cm² | >2,2 | 2,26 | 2,24 | 2,30 | 2,27 |
| Stiffness (not cured) | mg | >1500 | 1200,10 | 1511,30 | 1555,70 | 1422,37 |
| Stiffness (cured*) | mg | >2000 | 1911,30 | 1911,30 | 1955,80 | 1926,13 |
| Burst (after aging**) | kg/cm² | >1,2 | 1,20 | 1,19 | 1,20 | 1,20 |

**Table 3 - Test 1, 30 wt% lignin in the resin composition**

| **Characteristics** | **Unit** | **Target** | **Test 1** | **Test 2** | **Test 3** | **Average** |
|---|---|---|---|---|---|---|
| Burst (not cured) | kg/cm² | >1,2 | 1,10 | 1,15 | 1,17 | 1,14 |
| Burst (cured*) | kg/cm² | >2,2 | 2,24 | 2,26 | 2,27 | 2,26 |
| Stiffness (not cured) | mg | >1500 | 1644,60 | 1600,20 | 1911,30 | 1718,70 |
| Stiffness (cured*) | mg | >1900, preferably >2000 | 2133,60 | 2178,00 | 2133,60 | 2148,40 |
| Burst (after aging**) | kg/cm² | >1,2 | 1,18 | 1,22 | 1,23 | 1,21 |

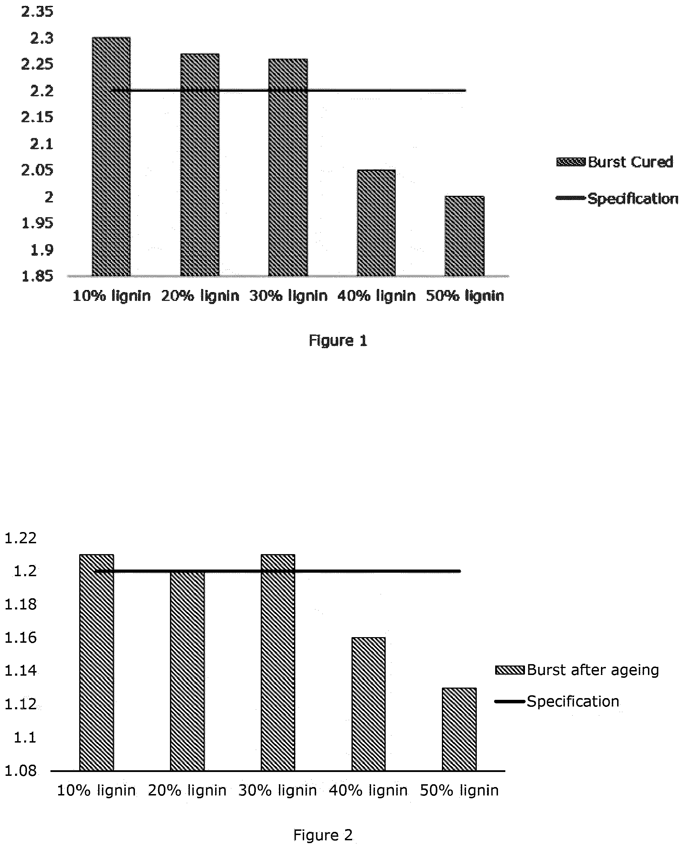

Figures 1 and 2 illustrate the relative burst strengths for resin compositions containing 10wt%, 20wt%, 30wt%, 40wt% and 50wt% lignin after curing and after ageing at 160 °C for 24h, respectively. Satisfactory results were obtained with lignin compositions of up to 30wt%. Levels of lignin greater than this result in significantly reduced burst resistance.

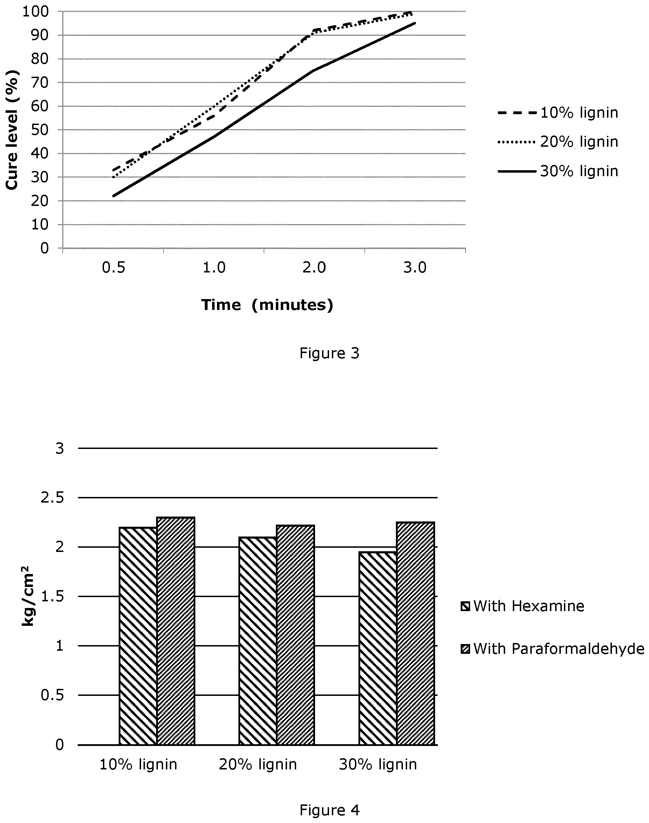

Figure 3 illustrates that the cure time at 165 °C of the resin compositions increases with increasing lignin content.

### Example 2

In order to identify a preferred additive, resin compositions were prepared with hexamine and paraformaldehyde to evaluate the effects of these additives on burst strength and stiffness. Samples containing varying quantities of lignin and hexamine or lignin and paraformaldehyde were prepared as shown in Table 6 below and tested according to the test methods described above.

**Table 6**

| | **Test 1** - **10% lignin** | **Test 2** - **20% lignin** | **Test 3** - **30% lignin** |
|---|---|---|---|
| Resole resin | 89.0 % | 78.0 % | 67.0 % |
| Lignin | 10.0 % | 20.0 % | 30.0 % |
| Hexamine or paraformaldehyde | 1.0 % | 2.0 % | 3.0 % |

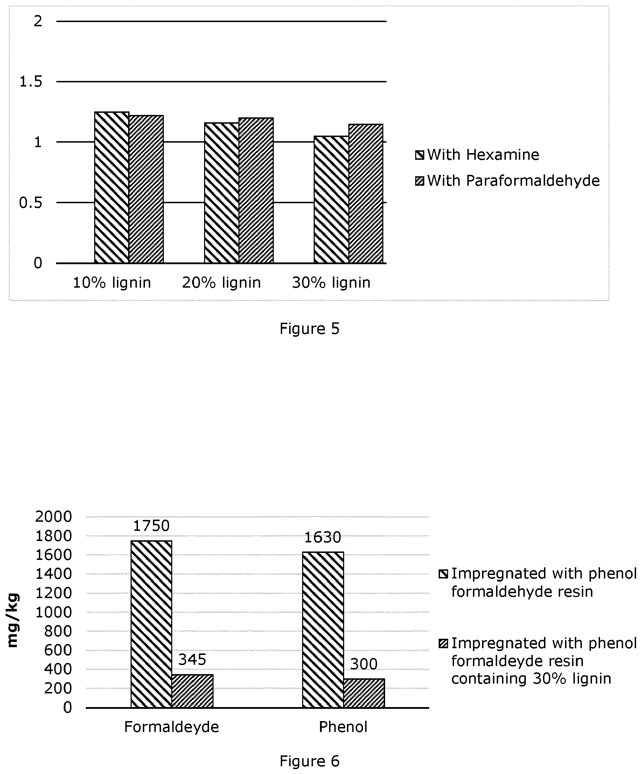

Figures 4 and 5 illustrate that paraformaldehyde produces greater burst resistance in the tested resin compositions than hexamine.

### Example 3

In order to compare the solubility of vinsol and Kraft lignin, four mixtures were prepared and evaluated.

**Table 7**

| **Solution** | **Components** | **Observations** |
|---|---|---|
| A0 | Pure Vinsol in Methanol at 50% solids content | Almost entirely insoluble. Hard precipitate formed. |
| B0 | Pure Kraft lignin in Methanol at 50% solids content | Partially soluble. Small soft precipitate formed. |
| A1 | 32,5% solid content formulation in methanol with the following formulation: 60% Resole, 30% Vinsol and 10% Cross-linker (diacyandiamide-formaldehyde condensate) | Vinsol insoluble in resole resin and completely insoluble in the solvent system. |
| B1 | 32,5% solid content formulation in Methanol with the following formulation: 60% Resole, 30% Lignin and 10% cross linker (dicyandiamide-formaldehyde condensate). | Complete solubility of the mixture with no precipitate observed. |

### Example 4

Tests were conducted to evaluate the ability of a solvent system disclosed in prior art document, US3294582, to dissolve compositions of vinsol and lignin resins. Solvent mixtures of ethanol, isopropanol and water were prepared according to the quantities disclosed in US3294582. Four different formulations containing vinsol and lignin were prepared and their solubilities evaluated.

**Table 7**

| **Solution** | **Components** | **Observations** |
|---|---|---|
| A3 | -46% resole | Poor solubility. Hard precipitate formed. |
| | -8% water | |
| | -11% Vinsol | |
| | -16% Ethanol | |
| | -18% isopropanol | |
| | (wt/wt) | |
| A4 | -70% resole (present in a 65% wt/vol solution of EtOH) | Poor solubility. Soft precipitate formed. |
| | -13% water | |
| | -17% Vinsol (present in a 60% solution of isopropanol) | |
| | (wt/vol) | |
| B3 | -46% resole | Poor solubility. Hard precipitate formed. |
| | -8% water | |
| | -11% Kraft lignin | |
| | -16% Ethanol | |
| | -18% isopropanol | |
| | (wt/wt) | |
| B4 | -70% resole (present in a 65%wt/vol solution of EtOH) | Moderate solubility, small precipitate observed. |
| | -13% water | |
| | -17% Kraft lignin (present in a 60% solution of isopropanol) | |

### Example 5

Formation of filtration media:
A resin composition was made according to the components and quantities listed in Table 8.

**Table 8**

| | **%** | **Weight (kg)** |
|---|---|---|
| Methanol | | 560 |
| Resole resin (52%) | 61.5 | 470 |
| (34%) Cross linker (dicyandiamide-formaldehyde condensate) | 8.9 | 101 |
| Solid lignin (97%) | 29.6 | 115 |
| Yellow dye | 0.004 | 2.2 |
| Total solid | 31.6% | |

In a first step, lignin was dissolved in resole resin. The resin/lignin mixture was transferred to a reactor and a cross linker was added, methanol and dye were added. The combined components were then mixed to produce a dark solution having a solids content of 64%, a viscosity of 830.5 mPa.s, a density of 1.107 g/cm³, and a pH of 5.53.

The resin composition was impregnated into a fibrous web using an applicator and a dosing roller, so that uniform impregnation was obtained. The fibrous web comprised >95wt% cellulose fibres. The impregnated fibrous web was analysed, the results of which are summarised in Table 9 below.

**Table 9**

| **Physical properties** | **Unit** | **Norm** | **Specification** | **First roll** | **Second roll** |
|---|---|---|---|---|---|
| Dry base paper weight | g/m² | TM.34.003 | 87 - 93 | 90,2 | 91,3 |
| Dry saturated paper weight | g/m² | TM.34.003 | 107 - 115 | 112,2 | 114,2 |
| Wet saturated paper weight | g/m² | TM.34.003 | 115 - 121 | 119,3 | 120,4 |
| Thickness | µm | TM.34.006 | 380 - 480 | 465 | 472 |
| Corrugation | µm | TM.34.006 | 270 - 330 | 291 | 305 |
| Not cured burst strength | kPa | TM.34.008 | >150 | 161 | 154 |
| Cured burst strength | kPa | TM.34.008 | >230 | 260 | 257 |
| Resin content | % | TM.11.14 | 16 - 20 | 19,6 | 20,0 |
| Permeability | l/seg.m² | TM.34.009 | 500 - 580 | 565 | 578 |
| Maximum pore size | µm | TM.34.013 | <87 | 85 | 86 |
| Mean pore size | µm | TM.34.013 | 64 - 72 | 72 | 73 |
| Stiffness | mg | TM.34.012 | | 2266,9 | 2400,2 |

### Example 6

The above impregnated filtration media was evaluated for formaldehyde and phenol emissions. The methods for determining free-phenol or free-formaldehyde in the filtration media paper implement UV-VIS spectrometry. For determining the free-phenol in the paper, the test is conducted with 4-aminoantipyrine in the presence of hexacyanoferrate (III) at a wavelength of 510 nm. For determining the free-formaldehyde in the paper, the test is conducted using the reaction of 3-methyl-2-benzothiazolinonehydrazone hydrochloride hydrate (MBTH) and iron (III) chloride hexahydrate at a wavelength of 628 nm. In the case the paper contains formaldehyde, this reaction will conduct to a blue-colour derivative.

The results are illustrated in Figure 6 and show that the filtration media impregnated with resin containing 30% lignin produced an 80.3% reduction in formaldehyde emission and an 81.6 % reduction in phenol emission in comparison to a filtration media impregnated with resole resin only.

### Example 7

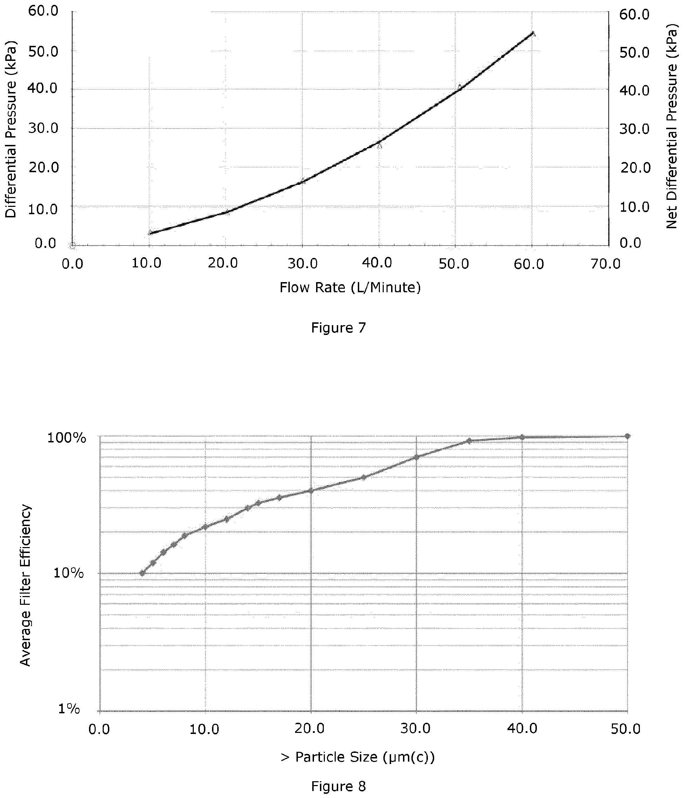

An oil filter media was prepared and impregnated with the resin composition containing lignin disclosed here-above. The oil filter media was subjected to a flow restriction test, a filtration efficiency test, and a differential pressure test, as defined in ISO 4548-12 standard, the results of which are shown in Figures 7, 8 and 9. The standard testing used corresponds to a multi-pass filtration test with continuous contaminant injection and employed an online particle counting method for evaluating the performance of full flow lubricating oil filter medias for internal combustion engines. In addition it was noted that the oil filter media was easy to pleat and did not emit smoke or odour during use.

### Example 8

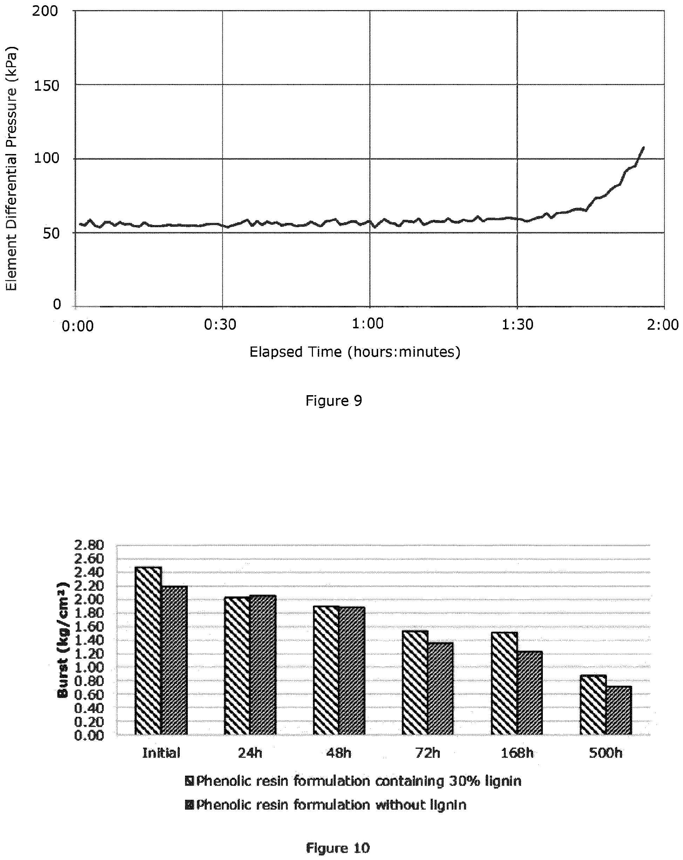

Hot oil resistance at 140 °C test. The hot oil resistance test is conducted as follows. Once the sample is fully cured, a MULLEN^{®} burst strength test is performed and the value of this test is recorded (initial resistance value). Five other paper samples are accommodated in an oil bath equipment filled with approximately 12 litres of SLX OW30 or 5W-30 oil. The oil bath equipment is adjusted to a temperature of 140°C. The paper samples in the oil bath equipment are gradually removed. More particularly, one paper sample is removed from the oil bath equipment after 24 hours, 48 hours, 72 hours, 168 hours and 500 hours. Once the paper sample is removed from the oil bath equipment, the excess of oil is removed with an absorbent paper and this sample is placed in a climate chamber adjusted to 25°C and 50% relative humidity for 2 hours. After this time in the climate chamber, the MULLEN^{®} burst strength test is conducted on this sample and the obtained value is noted. The results are illustrated in Figure 10 and show that the resin composition containing lignin displayed higher burst strengths than the lignin-free resin at all time intervals.

### Example 9

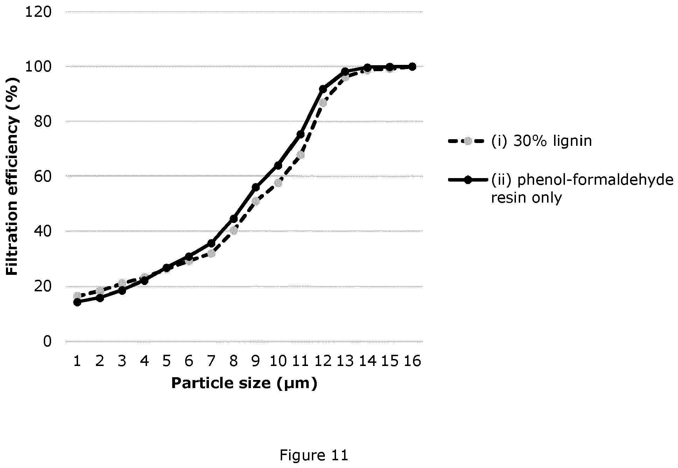

The filtration efficiency of planar filtration media samples impregnated with (i) 30% lignin-containing phenolic resin, and (ii) lignin-free phenolic resin, were tested according to the testing protocols defined above. The results are provided in Figure 11 which shows that the filtration media impregnated with the lignin-containing resin composition displayed comparable filtration efficiency to filtration media impregnated with the lignin-free phenolic resin.

## Claims

1. A filtration media comprising a fibrous web impregnated with a resin composition comprising lignin, wherein:
the fibrous web comprises the lignin in an amount of from 0.1 to 30 wt% by weight of the fibrous web; and
the lignin has a weight average molecular weight of less than 20,000 g/mol, when measured according to ASTM D4001-13 standard, said filtration media being **characterized in that** the density of the lignin is less than 1,2g/ cm³.

2. The filtration media as claimed in claim 1, wherein the lignin has a pH of less than 7, preferably from 3 to 5, most preferably from 4 to 4.5.

3. The filtration media as claimed in claim 1 or claim 2, wherein the resin composition has a dynamic viscosity of less than 15 mPa.s.

4. The filtration media as claimed in any one of claims 1 to 3, wherein the lignin has a density of less than 1 g/cm³, preferably between 0.20 g/cm³ and 0.75 g/cm³, and more preferably between 0.25 g/cm³ and 0.45 g/cm³.

5. The filtration media as claimed in any one of claims 1 to 4, wherein the resin composition further contains a formaldehyde scavenger having at least one primary or secondary amine functional group, or being a polyamine.

6. The filtration media as claimed in any one of claims 1 to 5, wherein the resin composition comprises lignin and a phenolic resin, preferably in a lignin:phenolic resin weight ratio of from 1:1 to 1:9, preferably from 1:1 to 1:4, more preferably 1:2.

7. The filtration media as claimed in any one of claims 1 to 6, which comprises from 10 wt% to 50 wt% of the resin composition.

8. A method of manufacturing a filtration media as claimed in any one of claims 1 to 7, comprising impregnating a fibrous web with a lignin-containing resin composition and curing the impregnated fibrous web.

9. The filtration media of any one of claims 1 to 7, or the method of claim 8, wherein the fibrous web comprises at least 95 wt% cellulose fibres based on total weight of fibres.

10. The filtration media of any one of claims 1 to 7, or the method of claim 8, wherein the fibrous web comprises at least 95 wt% synthetic fibres based on total weight of fibres.

11. The filtration media of any one of claims 1 to 7, or the method of claim 8, wherein the fibrous web comprises a mixture of cellulose fibres and synthetic fibres.

12. The filtration media or method of claim 11, wherein the synthetic fibres are present in the fibrous web in an amount of up to 50 wt%, preferably between 10 wt% and 30 wt% of total weight of fibres.

13. The filtration media of any one of claims 1 to 7 and 9 to 12, or the method of any one of claims 8 to 12, wherein the cellulose fibres are selected from one or more of softwood fibers, hardwood fibers, vegetable fibers and regenerated cellulose fibers.

14. The filtration media of any one of claims 1 to 7 and 9 to 13, or the method of any one of claims 8 to 13, wherein the filtration media is selected from the group comprising oil filtration media, air filtration media, fuel filtration media, hydraulic filtration media, industrial filtration media, dielectric fluid filtration media, and water filtration media.

15. Use of the filtration media according to claim 14, wherein the air filtration media is used in a heavy panel filter, or in a duty air panel filter.

## Patentansprüche

1. Filtrationsmedium, das eine Faserstoffbahn umfasst, die mit einer Lignin umfassenden Harzzusammensetzung imprägniert ist, wobei:
die Faserstoffbahn das Lignin in einer Menge von 0,1 bis 30 Gew.-% der Faserstoffbahn umfasst; und
das Lignin ein gewichtsmittleres Molekulargewicht von weniger als 20.000 g/mol aufweist, wenn es gemäß der Norm ASTM D4001-13 gemessen wird, wobei das Filtrationsmedium **dadurch gekennzeichnet ist, dass** die Dichte des Lignins weniger als 1,2 g/cm³beträgt.

2. Filtrationsmedium nach Anspruch 1, wobei das Lignin einen pH-Wert von weniger als 7, bevorzugt von 3 bis 5, besonders bevorzugt von 4 bis 4,5 aufweist.

3. Filtrationsmedium nach Anspruch 1 oder Anspruch 2, wobei die Harzzusammensetzung eine dynamische Viskosität von weniger als 15 mPa.s aufweist.

4. Filtrationsmedium nach einem der Ansprüche 1 bis 3, wobei das Lignin eine Dichte von weniger als 1 g/cm³, bevorzugt zwischen 0,20 g/cm³ und 0,75 g/cm³ und bevorzugter zwischen 0,25 g/cm³ und 0,45 g/cm³ aufweist.

5. Filtrationsmedium nach einem der Ansprüche 1 bis 4, wobei die Harzzusammensetzung weiter einen Formaldehydfänger enthält, der mindestens eine primäre oder sekundäre aminfunktionelle Gruppe aufweist oder ein Polyamin ist.

6. Filtrationsmedium nach einem der Ansprüche 1 bis 5, wobei die Harzzusammensetzung Lignin und ein Phenolharz umfasst, bevorzugt in einem Gewichtsverhältnis von Lignin:Phenolharz von 1:1 bis 1:9, bevorzugt von 1:1 bis 1:4, bevorzugter 1:2.

7. Filtrationsmedium nach einem der Ansprüche 1 bis 6, das 10 Gew.-% bis 50 Gew.-% der Harzzusammensetzung umfasst.

8. Verfahren zur Herstellung eines Filtrationsmediums nach einem der Ansprüche 1 bis 7, das das Imprägnieren einer Faserstoffbahn mit einer ligninhaltigen Harzzusammensetzung und das Härten der imprägnierten Faserstoffbahn umfasst.

9. Filtrationsmedium nach einem der Ansprüche 1 bis 7 oder Verfahren nach Anspruch 8, wobei die Faserstoffbahn mindestens 95 Gew.-% Zellulosefasern, bezogen auf das Gesamtgewicht der Fasern, umfasst.

10. Filtrationsmedium nach einem der Ansprüche 1 bis 7 oder Verfahren nach Anspruch 8, wobei die Faserstoffbahn mindestens 95 Gew.-% synthetische Fasern, bezogen auf das Gesamtgewicht der Fasern, umfasst.

11. Filtrationsmedium nach einem der Ansprüche 1 bis 7 oder Verfahren nach Anspruch 8, wobei die Faserstoffbahn eine Mischung aus Zellulosefasern und synthetischen Fasern umfasst.

12. Filtrationsmedium oder -verfahren nach Anspruch 11, wobei die synthetischen Fasern in der Faserstoffbahn in einer Menge von bis zu 50 Gew.-%, bevorzugt zwischen 10 Gew.-% und 30 Gew.-% des Gesamtgewichts der Fasern vorhanden sind.

13. Filtrationsmedium nach einem der Ansprüche 1 bis 7 und 9 bis 12 oder Verfahren nach einem der Ansprüche 8 bis 12, wobei die Zellulosefasern aus einer oder mehreren von Weichholzfasern, Hartholzfasern, Pflanzenfasern und regenerierten Zellulosefasern ausgewählt sind.

14. Filtrationsmedium nach einem der Ansprüche 1 bis 7 und 9 bis 13 oder Verfahren nach einem der Ansprüche 8 bis 13, wobei das Filtrationsmedium aus der Gruppe, die Ölfiltrationsmedium, Luftfiltrationsmedium, Kraftstofffiltrationsmedium, Hydraulikfiltrationsmedium, Industriefiltrationsmedium, Filtrationsmedium für dielektrische Flüssigkeiten und Wasserfiltrationsmedium umfasst, ausgewählt ist.

15. Verwendung des Filtrationsmediums nach Anspruch 14, wobei das Luftfiltrationsmedium in einem Hochleistungs-Plattenfilter oder in einem Betriebsluftplattenfilter verwendet wird.

## Revendications

1. Milieu de filtration comprenant une nappe fibreuse imprégnée d'une composition de résine comprenant de la lignine, dans lequel :
la nappe fibreuse comprend de la lignine en une quantité de 0,1 à 30 % en poids de la nappe fibreuse ; et
la lignine présente une masse moléculaire moyenne en poids inférieure à 20 000 g/mol, mesurée selon la norme ASTM D4001-13, ledit milieu de filtration étant **caractérisé en ce que** la densité de la lignine est inférieure à 1,2 g/cm³.

2. Milieu de filtration selon la revendication 1, dans lequel la lignine présente un pH inférieur à 7, de préférence de 3 à 5, le plus préférentiellement de 4 à 4,5.

3. Milieu de filtration selon la revendication 1 ou la revendication 2, dans lequel la composition de résine présente une viscosité dynamique inférieure à 15 mPa.s.

4. Milieu de filtration selon l'une quelconque des revendications 1 à 3, dans lequel la lignine présente une densité inférieure à 1 g/cm³, de préférence entre 0,20 g/cm³ et 0,75 g/cm³, et plus préférentiellement entre 0,25 g/cm³ et 0,45 g/cm³.

5. Milieu de filtration selon l'une quelconque des revendications 1 à 4, dans lequel la composition de résine contient en outre un piégeur de formaldéhyde présentant au moins un groupe fonctionnel amine primaire ou secondaire, ou étant une polyamine.

6. Milieu de filtration selon l'une quelconque des revendications 1 à 5, dans lequel la composition de résine comprend de la lignine et une résine phénolique, de préférence dans un rapport pondéral lignine:résine phénolique allant de 1:1 à 1:9, de préférence de 1:1 à 1:4, plus préférentiellement de 1:2.

7. Milieu de filtration selon l'une quelconque des revendications 1 à 6, qui comprend de 10 % en poids à 50 % en poids de la composition de résine.

8. Procédé de fabrication d'un milieu de filtration selon l'une quelconque des revendications 1 à 7, comprenant l'imprégnation d'une nappe fibreuse avec une composition de résine contenant de la lignine et le durcissement de la nappe fibreuse imprégnée.

9. Milieu de filtration selon l'une quelconque des revendications 1 à 7, ou procédé selon la revendication 8, dans lequel la nappe fibreuse comprend au moins 95 % en poids de fibres de cellulose sur la base du poids total des fibres.

10. Milieu de filtration selon l'une quelconque des revendications 1 à 7, ou procédé selon la revendication 8, dans lequel la nappe fibreuse comprend au moins 95 % en poids de fibres synthétiques sur la base du poids total des fibres.

11. Milieu de filtration selon l'une quelconque des revendications 1 à 7, ou procédé selon la revendication 8, dans lequel la nappe fibreuse comprend un mélange de fibres de cellulose et de fibres synthétiques.

12. Milieu de filtration ou procédé selon la revendication 11, dans lequel les fibres synthétiques sont présentes dans la nappe fibreuse en une quantité allant jusqu'à 50 % en poids, de préférence entre 10 % en poids et 30 % en poids du poids total de fibres.

13. Milieu de filtration selon l'une quelconque des revendications 1 à 7 et 9 à 12, ou procédé selon l'une quelconque des revendications 8 à 12, dans lequel les fibres de cellulose sont choisies parmi une ou plusieurs de fibres de bois résineux, de fibres de bois dur, de fibres végétales et de fibres de cellulose régénérée.

14. Milieu de filtration selon l'une quelconque des revendications 1 à 7 et 9 à 13, ou procédé selon l'une quelconque des revendications 8 à 13, dans lequel le milieu de filtration est choisi dans le groupe comprenant des milieux de filtration d'huile, des milieux de filtration d'air, des milieux de filtration de carburant, des milieux de filtration hydraulique, des milieux de filtration industrielle, des milieux de filtration de fluide diélectrique et des milieux de filtration d'eau.

15. Utilisation du milieu de filtration selon la revendication 14, dans laquelle le milieu de filtration d'air est utilisé dans un filtre à panneau lourd, ou dans un filtre à panneau d'air de service.
